Europäisches Patentamt

European Patent Office

Office européen des brevets

(11) Veröffentlichungsnummer: **0 499 833 A1**

# EUROPÄISCHE PATENTANMELDUNG

(21) Anmeldenummer: **92101244.9**

(22) Anmeldetag: **27.01.92**

(51) Int. Cl.5: **B09B 3/00**

(30) Priorität: **20.02.91 IE 589/91**

(43) Veröffentlichungstag der Anmeldung:
**26.08.92 Patentblatt 92/35**

(84) Benannte Vertragsstaaten:
**AT BE CH DE DK ES FR GB GR IT LI LU MC NL PT SE**

(71) Anmelder: **H.P. Chemie Pelzer Research & Development Ltd.**
**Villa Thomas, Doneraile Walk**
**Tramore, County Waterford(IE)**

(72) Erfinder: **Pelzer, Helmut, Dipl.-Ing.**
**Neue Strasse 5**
**W-5840 Herdecke-Ende(DE)**

(74) Vertreter: **Schneider, Wilhelm**
**Merckelbachweg 3**
**W-4770 Soest(DE)**

(54) Mulden-Misch-Reaktor und Verfahren zur Behandlung kontaminierter Materialien.

(57) Die Erfindung betrifft einen Mulden-Misch-Reaktor zur Behandlung kontaminierter Materialien, wie Schüttgüter, Schlämme oder Flüssigkeiten in großen Mengen durch Waschen oder biologische Reinigung im Batch-Verfahren.

Die erfinderische Lösung besteht darin, die kontaminierten Materialien in einem Mulden-Misch-Reaktor zu behandeln, der aus einer nach oben offenen, trogförmigen Mulde (1) mit Drainagesystem (2) sowie Mischeinrichtung (3), Belüftungseinrichtung (4), Brausesystem (5) und Heizungssystem (6) besteht. Mehrere Mulden-Misch-Reaktoren können linear hintereinander und / oder parallel nebeneinander angeordnet sein. Die Mulde (1) besteht vorzugsweise aus verschraubbaren, plattenförmigen Elementen (7), die aus metallischen Werkstoffen, Betonwerkstoffen oder Kunststoffen gefertigt sind. Das Drainagesystem (2) besteht aus am Boden der Mulde (1) eingelegten Drainagerohren (26).

Die Mischeinrichtung (3) ist aus mindestens zwei über Führungsräder (11) an den Längsseiten der Mulde (1) geführten Verbindungselementen (10) mit mehreren dazwischen aufgehängten Mischgeräten (13) und außen liegendem Motorantrieb (14) erstellt. Mehrere Mischeinrichtungen (3) können übereinander, hintereinander und / oder parallel angeordnet sein. Die Verbindungselemente (10) sind vorzugsweise als Endloskette (15) ausgebildet, die horizontal über den Boden und im Oberflächenbereich des zu mischenden Gutes in der Mulde (1) geführt sind. Die Verbindungselemente (10) mit den Aufhängungen für die Mischgeräte (13) können auch oberhalb des zu mischenden Gutes geführt sein.

Als Belüftungseinrichtung (4) sind am Boden der Mulde (1) gelochte Rohre (18) eingelegt. Ein Brausesystem (5) ist an den Innenwänden bzw. über der Mulde (1) angeordnet. An den Außenwänden und am Boden weist die Mulde (1) ein Heizungssystem (6) auf. Der komplette Mulden-Misch-Reaktor kann von einem Gehäuse (24) umschlossen sein.

Die Erfindung betrifft einen Mulden-Misch-Reaktor und ein Verfahren zur Behandlung kontaminierter Materialien, wie Schüttgüter, Schlämme oder Flüssigkeiten durch Waschen oder biologische Reinigung.

Von den für die Entsorgung von Böden entwickelten Einrichtungen und Verfahren werden vor allem folgende Methoden benutzt:
Behandlung des Bodens vor Ort durch Auf- oder Einbringen von biologischen Trägersubstanzen, die mit Bakterien beaufschlagt sind, im Oberflächenbereich. Durch Niederschlagswasser können die Schadstoffe in größere Tiefen transportiert werden, wo sie praktisch nicht mehr erreichbar sind. Biologische In-situ-Verfahren haben damit dort ihre Grenzen, wo die Schadstoffmengen so groß sind, daß sie nicht mehr oder nicht schnell genug wirken können.

Das Auswaschen kontaminierter Böden mit geeigneten Waschmitteln ist ein relativ kostenaufwendiges Verfahren. Von den Waschmitteln mit gefährlichen Schadstoffen geht eine zusätzliche Gefährdung für die Umwelt aus und außerdem wird die biologische Substanz des Bodens geschädigt. Die anschließende Entsorgung der Waschmittel von den Schadstoffen ist aufwendig.

Das Ausbrennen der Schadstoffe erfordert, je nach Schadstoffart, Behandlungstemperaturen von ca. 650 Grad Celsius, gegebenenfalls auch über 1.200 Grad Celsius, und führt in jedem Fall zu sterilem Bodenmaterial. Das Ausbrennverfahren kann eine bloße Verlagerung der Schadstoffprobleme zur Folge haben.

Das chemische Binden von Schadstoffen mit anschließendem Recycling des behandelten Bodens als Baustoff- oder Abdeckmaterial für Deponien führt ebenfalls grundsätzlich zu einer Verlagerung dieser Probleme, da ein Auswaschen der Schadstoffe in unbestimmter Zukunft nicht mit Sicherheit auszuschliessen ist.

Der biologische Abbau von Schadstoffen in entsprechenden Anlagen zur Zwischen- und Endlagerung der Böden ist eine bevorzugte Methode. Hier werden die Probleme nicht auf andere Bereiche verlagert und es wird ein biologisch relativ gesunder Boden erhalten, der auch als Mutterboden verwendbar ist.

Bei dieser Methode muß beachtet werden, daß keine Schadstoffe aus dem kontaminierten Boden ausgewaschen werden und in den Unterboden versickern können. Aus diesem Grunde werden Dichtungsfolien oder Betonplatten als wasser- und schadstoffdichte Unterlagen zum Schutz des Bodens verwendet. Es hat sich jedoch gezeigt, daß Folien sich für eine Zwischenlagerung nicht eignen, da Räumgeräte zum Laden und Aufschichten eingesetzt werden, die zu Beschädigungen der Folien führen können. Eine Wiederverwendung der Folien ist in der Regel nicht möglich (DE-OS 38 43 146, 39 20 827, 39 01 050, 38 33 118, 29 41 145).

Für die Entfernung von Schadstoffen aus Flüssigkeiten, wie Abwässern sind eine Reihe von biologischen Verfahren bekannt, die in großen flachen, offenen Belebungs- und Sedimentationsbecken, die teilweise über Düsen belüftet werden, durchgeführt werden. Die Nachteile sind der sehr große Platzbedarf, das Entweichen der Abgase in die Umwelt sowie die Geruchsbelästigung.

Bei anderen bekannten Verfahren zur biologischen Schadstoffbeseitigung von verunreinigten Abwässern werden diese in hohen zylindrischen Türmen oder Schächten ähnlich einer Blasensäule bzw. in geschlossenen mehrstufigen Reaktoren aus metallischen Werkstoffen (EP 00 03 547), die teilweise unter Überdruck und mit Injektionsmischeinrichtungen (DE OS 37 09 174) arbeiten oder mit auf porösen Trägermaterialien immobilisierten Mikroorganismen gefüllt sind (DE OS 38 16 679), gereinigt.

Diese Verfahren und Vorrichtungen haben den Nachteil, daß sie technisch bedeutend komplizierter, wenig flexibel und in ihrem Aufnahmevolumen sehr begrenzt sind.

Der Erfindung liegt die Aufgabe zugrunde, einen Reaktor und ein Verfahren zur Behandlung kontaminierter Materialien durch Waschen oder biologische Reinigung zu entwickeln, der über solche Abmaße verfügt, daß auch große Mengen Schüttgüter, Schlämme oder Flüssigkeiten im Batch-Verfahren unter ökologischen Gesichtspunkten behandelt werden können.

Erfindungsgemäß wird die Aufgabe dadurch gelöst, daß kontaminierte Materialien wie Schüttgüter, Schlämme oder Flüssigkeiten in großen Mengen durch Waschen oder biologische Reinigung in einem Mulden-Misch-Reaktor behandelt werden, der aus einer nach oben offenen trogförmigen Mulde (1) mit Drainagesystem (2) sowie Mischeinrichtung (3), Lüftungseinrichtung (4), Brause- (5) und Heizungssystem (6) besteht. Es können auch mehrere Mulden-Misch-Reaktoren linear hintereinander und / oder parallel nebeneinander angeordnet sein.

Die Mulde des Mulden-Misch-Reaktors besteht vorzugsweise aus vorgefertigten miteinander verschraubten, plattenförmigen Elementen (7), die beispielsweise aus versteiften metallischen Werkstoffen, betonwerkstoffen oder Kunststoffen hergestellt sind. Die Grundfläche und Höhe der Mulde ist in ihren Maßen variabel und nur vom Rastermaß der eingesetzten Elemente abhängig.

Das Drainagesystem (2) besteht vorzugsweise aus am Boden der Mulde (1) eingelegten Drainagerohren (26), die über eine Zuführung (23) mit dem Mulden-Misch-Reaktor im Kreislauf verbunden sind. Statt der Drainagerohre (26) kann der Boden der Mulde (1) mit plattenförmigen Filterelementen (8) ausgelegt sein oder der Boden der Mulde ist selbst als Drainageplatte (9) ausgebildet.

In der Mulde (1) des Mulden-Misch-Reaktors befindet sich eine Mischeinrichtung (3), die aus mindestens zwei über Führungsräder (11) oder mit gleitfähigen Materialien beschichteten Führungsschienen (12) an den Längsseiten der Mulde (1) geführten Verbindungselementen (10) mit mehreren dazwischen aufgehängten Mischgeräten (13) und außen liegenden Motorantrieb (14) besteht. Vorzugsweise können mehrere Mischeinrichtungen (3) übereinandern, hintereinander und / oder parallel ange-ordnet sein. Die Verbindungselemente (10) sind vorzugsweise als Endloskette (15) ausgebildet, die horizontal über den Boden und im Oberflächenbereich des zu mischenden Gutes in der Mulde (1) geführt sind.

Zwischen den Verbindungselementen (10) sind Mischgeräte (13), beispielsweise in Form von Rechen (16 oder Pflugscharen (17) aufgehängt. Diese durchfahren mit den bewegten Verbindungselementen das zu reinigende Material am Muldenboden, vermischen es und zerstören störende Kanalbildungen im Gut. Am Ende der Mulde werden sie durch eine Umlenkung aus dem Gut herausgehoben und tauchen dann erneut in das Gut ein und durchfahren es im Oberflächenbereich in Gegenrichtung. Am Ende der Mulde wird die Durchfahrtrichtung erneut umgekehrt und die Mischgeräte durchfahren das Gut wieder am Boden. Auf diese Weise wird das Gut stets durchmischt, Kanalbildungen durch strömende Flüssigkeiten und Gase werden verhindert. Die Durchfahrtgeschwindigkeit des Mischgeräte kann variiert werden.

Die Verbindungselemente mit den Aufhängungen für die Mischgeräte können auch oberhalb des zu mischenden Gutes in Längsrichtung der Mulde und / oder quer dazu geführt sein. Die Mischgeräte sind in sich selbst drehbar und / oder vertikal bewegbar ausgebildet.

Durch geeignete Umschaltung kann ihre Bewegungsrichtung geändert werden, so daß sie mehrfach die Mulde bis zum einen Ende durchlaufen, dort umgesteuert werden und die Mulde dann in Gegenrichtung durchlaufen.

So erfolgt eine optimale Durchmischung des Gutes. Dadurch, daß die Aufhängung der Mischgeräte oberhalb des Gutes erfolgt, ist auch der Antrieb sehr einfach aus dem Bereich möglicher Verschmutzungen heraus anzuordnen.

Der Motorantrieb (14) mehrerer Mischeinrichtungen (3) kann gekoppelt sein. Als Antriebsmotore können regelbare Gleichstrom- oder Wechselstrommotore bzw. Hydraulikmotore mit variabler Drehgeschwindigkeit und umschaltbarer Drehrichtung eingesetzt werden.

Die Mulde (1) kann mit einer Blüftungseinrichtung (4), beispielsweise mit am Boden der Mulde eingelegten gelochten Rohren (18), ausgerüstet sein, die von außen mit Gas oder Luft beaufschlagt werden können. Vorzugsweise kann der Belüftungseinrichtung (4) zum Erwärmen der Luft oder des Gases ein Heizelement (22) vorgeschaltet sein.

Ein Brausesystem (5) ist an den Innenwänden oder über der Mulde (1) angeordnet, dem auch ein Heizelement (6) zum Erwärmen der Flüssigkeit vorgeschaltet sein kann. Statt des Brausesystems (3) können Düseneinrichtungen (19) zum Einsatz kommen. Ein am Boden der Mulde (1) befindlicher Abzug (20) für die Flüssigkeit ist über eine Reinigungsanlage (21) mit dem Brausesystem (5) verbunden.

An den Außenwänden und am Boden der Mulde (1) bzw. bei der Behandlung von Flüssigkeiten in der Mulde (1) sind zusätzlich in der Mulde (1) die einzelnen Heizelemente (22) des Heizungssystems (6) angeordnet. Als Heizelemente (22) werden Gas- oder Ölbrenner bzw. elektrische Heizgeräte eingesetzt. Infolge der Durchmischung des Gutes wird eine gute Wärmeverteilung in der Mulde gewährleistet.

Der komplette Mulden-Misch-Reaktor ist vorzugsweise von einem mit einer Absaugvorrichtung ausgestatteten Gebäude, Zelt oder einer Haube (24) umschlossen. Auf diese Weise kann der Austritt von Reaktionsgasen in die Umgebung verhindert werden. Das Abgas kann abgesaugt und einer Reinigung zugeführt werden.

Der erfindungsgemäße Mulden-Misch-Reaktor wird nachfolgend anhand eines schematischen Ausführungsbeispiels in einer Figur näher erläutert.

Die biologisch zu reinigenden kontaminierten Böden werden in die Mulde (1) des Mulden.Misch-Reaktors eingegeben. Eine aus vorgefertigten miteinander verschraubten plattenförmigen Elementen (7) aus Betonwerkstoff hergestellte Mulde (1) hat beispielsweise ein Fassungsvermögen von V = 750 m hoch 3 (Breite: 3 m, Länge: 100 m, Höhe: 2,5 m).

Mittels einer von außen mit einem Motor (14) angetriebenen Mischeinrichtung (3), die aus zwei über Führungsräder (11) an den Längsseiten der Mulde (1) entlag bewegten Endlosketten (15) mit den dazwischen augehängten Rechen (16) besteht, wird das biologisch zu reinigende Schüttgut am Boden der Mulde (1) durchfahren vermischt und störende Kanalbildungen im Gut zerstört. Am Ende der Mulde (1) werden sie durch eine Umlenkung aus dem Gut herausgehoben und tauchen erneut in das Gut ein und durchfahren es im Oberflächenbereich in Gegenrichtung. Am Ende der Mulde (1) wird die Durchfahrtrichtung erneut umgekehrt und die Rechen (16) durchfahren das Gut wieder am Boden der Mulde (1). Dadurch wird das Gut stets durchmischt, Kanalbildungen durch strömennde Flüssigkeiten und Gase verhindert. Die Durchfahrtgeschwindigkeit der Rechen (16) variiert.

Durch am Boden der Mulde (1) eingelegt gelochte Rohre (18) wird das zu behandelnde Schüttgut mit Luft beaufschlagt und damit die Mikroorganismen mit Sauerstoff versorgt.

Das Schüttgut wird zur Gewährleistung der erforderlichen Temperatur von 15 - 35 Grad Celsius für die Mikroorganismen mittels der an den Außenwänden und am Boden der Mulde (1) als Heizelemente (22) installierten Ölbrenner erwärmt. Durch die Durchmischung des Schüttgutes wird in der gesmten Mulde (1) eine gute Wärmeverteilung gewährleistet.

Über das an den Innenwänden der Mulde angeordnete Brausesystem (5) wird das Schüttgut mit im Kreislauf geführter Reaktionslösung, Wasser und Nährstofflösung für die Mikroorganismen versetzt. Die durchströmende Flüssigkeit wird am Boden der Mulde (1) über eingelegte Drinagerohre (26) abgezogen und im Kreislauf erneut über das Brausesystem (5) dem Schüttgut in der Mulde (1) zugeführt.

Der komplette Mulden-Misch-Reaktor ist vorzugsweise von einem Gebäude (24) umschlossen. Dadurch wird der Austritt von Reaktionsgasen in die Umgebung verhindert. Die Abgase werden mittels einer Absaugvorrichtung (25) abgesaugt und einer Reinigung zugeführt. Nach beendeter Reaktions- und entsprechender Verweilzeit im Mulden-Misch-Reaktor kann das Schüttgut der Natur wieder zugeführt werden.

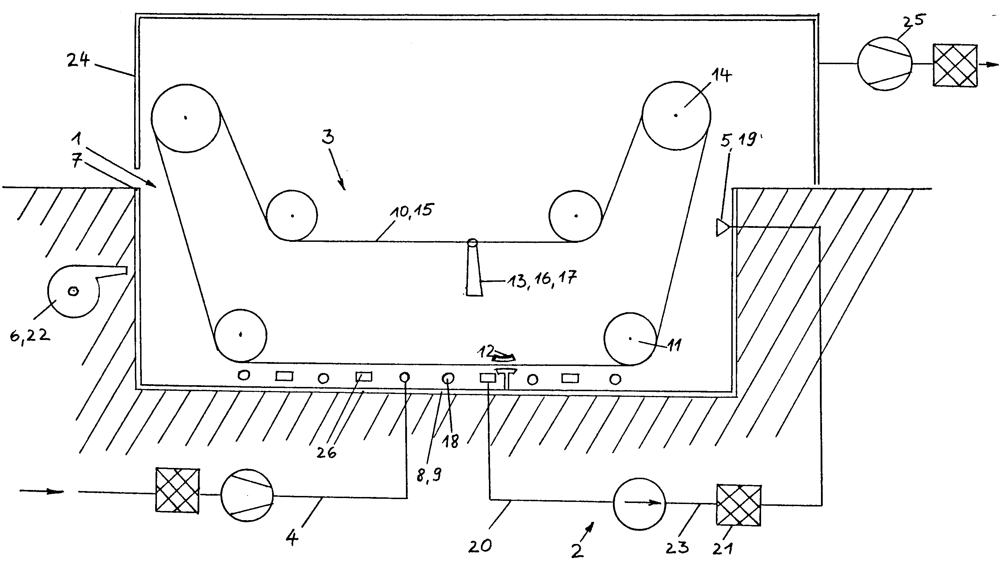

**Patentansprüche**

1. Mulden-Misch-Reaktor zur Behandlung kontaminierter Materialien,
**dadurch gekennzeichnet,**
daß der Mulden-Misch-Reaktor aus einer nach oben offenen, trogförmigen Mulde (1) mit Drainagesystem (2), Mischeinrichtung (3), Belüftungseinrichtung (4) sowie Brause- (5) und Heizungssystem (6) besteht.

2. Mulden-Misch-Reaktor nach Anspruch 1,
**dadurch gekennzeichnet,**
daß mehrere Mulden-Misch-Reaktoren linear hintereinander und / oder parallel nebeneinander angeordnet sind.

3. Mulden-Misch-Reaktor nach Anspruch 1 und 2,
**dadurch gekennzeichnet,**
daß die Mulde (1) vorzugsweise aus verschraubbaren, plattenförmigen Elementen (7) besteht.

4. Mulden-Misch-Reaktor nach Anspruch 1,
**dadurch gekennzeichnet,**
daß die Elemente (7) der Mulde (1) aus versteiften metallischen Werkstoffen, Betonwerkstoffen oder Kunststoffen bestehen.

5. Mulden-Misch-Reaktor nach Anspruch 1,
**dadurch gekennzeichnet,**
daß das Drainagesystem (2) vorzugsweise aus am Boden der Mulde (1) eingelegten Drainagerohren (26) besteht und über eine Zuführung (23) mit dem Mulden-Misch-Reaktor im Kreislauf verbunden ist.

6. Mulden-Misch-Reaktor nach Anspruch 5,
**dadurch gekennzeichnet,**
daß der Boden der Mulde (1) mit plattenförmigen Filterelementen (8) ausgelegt ist.

7. Mulden-Misch-Reaktor nach Anspruch 5 und 6,
**dadurch gekennzeichnet,**
daß der Boden der Mulde (1) selbst als Drainageplatte (9) ausgebildet ist.

8. Mulden-Misch-Reaktor nach Anspruch 1,
**dadurch gekennzeichnet,**
daß die Mischeinrichtung (3) aus mindestens zwei über Führungsräder (11) oder mit gleitfähigen Materialien beschichteten Führungsschienen (12) an den Längsseiten der Mulde (1) geführten Verbindungselementen (10) mit mehreren dazwischen aufgehängten Mischgeräten (13) und außenliegendem Motorantrieb (14) besteht.

9. Mulden-Misch-Reaktor nach Anspruch 1,2 und 8,
**dadurch gekennzeichnet,**
daß mehrere Mischeinrichtungen (3) übereinander, hintereinander und / oder parallel angeordnet sind.

10. Mulden-Misch-Reaktor nach Anspruch 8 und 9,
**dadurch gekennzeichnet,**
daß die Verbindungselemente (10) vorzugsweise als Endloskette (15) ausgebildet sind, die horizontal über den Boden und im Oberflächenbereich des zu mischenden Gutes in der Mulde (1) geführt sind.

11. Mulden-Misch-Reaktor nach Anspruch 8, 9 und 10
**dadurch gekennzeichnet,**
daß die verbindungselemente (10) mt den Aufhängungen für die Mischgeräte (13) oberhalb des zu mischenden Gutes geführt sind.

12. Mulden-Misch Reaktor nach Anspruch 11,
**dadurch gekennzeichnet,**
daß die Mischgeräte (13) an den Verbindungselementen (10) in Längsrichtung der Mulde (1) und / oder quer dazu geführt sind.

13. Mulden-Misch-Reaktor nach Anspruch 8, 9, 11 und 12,
    **dadurch gekennzeichnet,**
    daß die Mischgeräte (13) in sich selbst drehbar und / oder vertikal bewegbar ausgebildet sind.

14. Mulden-Misch-Reaktor nach Anspruch 8 bis 13,
    **dadurch gekennzeichnet,**
    daß die Mischgeräte (13) als Rechen (16) oder Pflugschare (17) ausgebildet sind.

15. Mulden-Misch-Reaktor nach Anspruch 2 und 9,
    **dadurch gekennzeichnet,**
    daß der Motorantrieb (14) von mehreren Mischeinrichtungen (3) gekoppelt sein kann.

16. Mulden-Misch-Reaktor nach Anspruch 8 bis 15,
    **dadurch gekennzeichnet,**
    daß als Antriebsmotore (14) regelbare Gleichstrom- oder Wechselstrommotore bzw. Hydraulikmotore mit variabler Drehgeschwindigkeit und umschaltbarer Drehrichtung eingesetzt werden.

17. Mulden-Misch-Reaktor nach Anspruch 1 und 2,
    **dadurch gekennzeichnet,**
    daß als Belüftungseinrichtung (4) am Boden der Mulde (1) gelochte Rohre (18) eingelegt und vorzugsweise Heizelemente (22) vorgeschaltet sind.

18. Mulden-Misch-Reaktor nach Anspruch 1 und 2,
    **dadurch gekennzeichnet,**
    daß das Brausesystem (5) an den Innenwänden oder über der Mulde (1) angeordnet und vorzugsweise Heizelemente (22) vorgeschaltet sind.

19. Mulden-Misch-Reaktor nach Anspruch 1, 2 und 18,
    **dadurch gekennzeichnet,**
    daß als Brausesystem (5) Düseneinrichtungen (19) eingesetzt werden.

20. Mulden-Misch-Reaktor nach Anspruch 1, 2, 18 und 19,
    **dadurch gekennzeichnet,**
    daß der am Boden der Mulde (1) befindliche Abzug (20) für die Flüssigkeit über eine Reinigungsanlage (21) mit dem Brausesystem (5) verbunden ist.

21. Mulden-Misch-Reaktor nach Anspruch 1 und 2,
    **dadurch gekennzeichnet,**

daß das Heizungssystem (6) Heizelemente (22) an den Außenwänden und am Boden der Mulde (1) bzw. zusätzlich direkt in der Mulde (1) aufweist.

22. Mulden-Misch-Reaktor nach anspruch 1, 2, 17, 18 und 21,
    **dadurch gekennzeichnet,**
    daß als Heizelemente (22) Gas- oder Ölbrenner bzw. elektrische Heizgeräte eingesetzt werden.

23. Mulden-Misch-Reaktor nach Anspruch 1 bis 22,
    **dadurch gekennzeichnet,**
    daß der komplette Mulden-Misch-Reaktor vorzugsweise von einem mit einer Absaugvorrichtung (25) ausgestatteten Gebäude (24), Zelt oder einer Haube umschlossen ist.

24. Verfahren zur Behandlung kontaminierter Materialien wie beispielsweise Schüttgüter, Böden u. dgl. durch biologische Reinigung nach Anspruch 1 bis 23,
    **dadurch gekennzeichnet,**
    daß das eingegebene Schüttgut in der Mulde (1) durch das installierte Heizsystem (6) auf ca. 15 bis 35 Grad Celsius erwärmt, mit Mikroorganismen versetzt und mit der über das Brausesystem (5) zugegebenen Nährstofflösung, mit Wasser und mit der durch die Belüftungseinrichtung (4) eingeblasenen Luft mittels der Mischeinrichtung (3) vermischt wird und bis zur Beendigung der Reaktionszeit im Mulden-Misch-Reaktor verweilt, sowie die durch das Gut strömende Flüssigkeit in dem am Boden der Mulde (1) eingelegten Drainagesystem (2) abgezogen, gereinigt und bgegeben wird, sowie die anfallenden Reaktionsgase über die Absaugvorrichtung (25) abgesaugt und gereinigt werden.

25. Verfahren zur Behandlung beispielsweise kontaminierter Flüssigkeiten durch biologische Reinigung nach Anspruch 1 bis 23,
    **dadurch gekennzeichnet,**
    daß die eingepumpte Flüssigkeit in der Mulde (1) durch das installierte Heizsystem (6) auf ca. 15 bis 35 Grad Celsius erwärmt, mit Mikroorganismen versetzt und mit der über das Brausesystem (5) zugegebenen Nährstofflösung und der durch die Belüftungseinrichtung (4) eingeblasenen Luft mittels Mischeinrichtung (3) und dem als zusätzliche Mischeinrichtung dienendem Drainagesystem (2) vermischt wird und bis zur Beendigung der Reaktionszeit im Mulden-Misch-Reaktor verweilt, sowie die anfallenden Reaktionsgase über die Absaugvorrichtung (25) entfernt und gereinigt werden.

EP 0 499 833 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 720 833 (XENEX GESELLSCHAFT ZUR BIOTECHNISCHEN SCHADSTOFFSANIERUNG MBH) <br> * Spalte 8, Zeile 57 - Spalte 9, Zeile 6 * <br> * Spalte 9, Zeile 66 - Spalte 10, Zeile 34 * <br> * Spalte 11, Zeile 41 - Zeile 51 * <br> * Spalte 12, Zeile 30 - Zeile 46 * <br> * Spalte 16, Zeile 53 - Spalte 18, Zeile 29 * <br> * Spalte 25, Zeile 49 - Zeile 66 * <br> * Spalte 26, Zeile 51 - Spalte 28, Zeile 12 * <br> * Spalte 30, Zeile 12 - Zeile 37; Abbildungen * | 1,2 | B09B3/00 |
| A | | 4-7, 17-20, 22-25 | |
| | --- | | |
| X | US-A-4 962 034 (KHAN) <br> * das ganze Dokument * | 1,18 | |
| A | | 2,4,5, 14,16, 17,20, 22-25 | |
| | --- | | **RECHERCHIERTE SACHGEBIETE (Int. Cl.5)** |
| A | DE-A-3 924 844 (NOCKEMANN ET AL) | 1,2,4,8, 10-13, 16,17, 21-24 | B09B |
| | * Spalte 4, Zeile 14 - Spalte 6, Zeile 24 * <br> * Spalte 6, Zeile 53 - Zeile 62; Abbildungen * | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 15 MAI 1992 | VAN DER ZEE W.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)